# EUROPÄISCHE PATENTANMELDUNG

(11) **EP 4 786 382 A1**
(43) Veröffentlichungstag der Anmeldung: **05.08.2026**
(21) Anmeldenummer: 26153168.5
(22) Anmeldetag: 21.01.2026
(51) Int. Cl.: B65G 43/08

(54) **VERFAHREN ZUM ANPASSEN MINDESTENS EINES ZEITFENSTERS UND VORRICHTUNG ZUM VERFOLGEN VON BEWEGTEN OBJEKTEN**

(30) Priorität: 31.01.2025 DE 102025103649
(71) Anmelder: KHS GmbH, 44143 Dortmund (DE)
(72) Erfinder: Löcklin, Sarah, 44143 Dortmund (DE); Kalis, Henning, 44143 Dortmund (DE); Fischer, Jan, 44143 Dortmund (DE)

(57) **Zusammenfassung**

Die Erfindung betrifft ein Verfahren (100) zum Anpassen eines Zeitfensters (32) zum Verfolgen eines entlang eines Transportpfads (12) bewegten Objekts (14) umfassend die Schritte: Empfangen (102) einer Vielzahl von Detektionssignalen (26) eines ersten Sensors (16), der am Transportpfad angeordnet ist, wobei je ein Detektionssignal (26) je einem entlang des Transportpfads bewegten Objekts zugeordnet ist; Festlegen (104) einer Vielzahl von Zeitfenstern für einen Teil der Detektionssignale (26), wobei das jeweils zugeordnete Objekt innerhalb des jeweiligen Zeitfensters (32) an einem zweiten Sensor (18), der in Transportrichtung des einen Objekts entlang des Transportpfads hinter dem ersten Sensor angeordnet ist, erwartet wird; Empfangen (106) einer Vielzahl von Triggersignalen (26) des zweiten Sensors in der Vielzahl der Zeitfenster, wobei jedes Triggersignal einen Detektionszeitpunkt des dem entsprechenden Zeitfenster zugeordneten Objekts an einer Position des zweiten Sensors am Transportpfad anzeigt; Ermitteln (108) einer Abweichung zwischen einem Soll-Detektionszeitpunkt (29) und der Vielzahl von Detektionszeitpunkten; und wenn die ermittelte Abweichung einen Schwellenwert überschreitet (110): Ausgeben (116) mindestens eines Warnsignals und/oder Anpassen (112) des Festlegens von zukünftigen Zeitfenstern (32) basierend auf der ermittelten Abweichung. Mit dem Verfahren (100) können Objekte mit geringem Aufwand und damit geringen Kosten verfolgt werden.

## Beschreibung

Bei der Herstellung und/oder auch Behandlung von Objekten, insbesondere von Behältern, können die Objekte in einer Reihe nacheinander entlang eines Transportpfads gefördert bzw. bewegt werden. Weiter können die Objekte während des Transports oder in einer am Transportpfad angeordneten Inspektionsvorrichtung inspiziert werden. Wenn fehlerhafte Objekte ermittelt werden, können diese aus dem Transportpfad entfernt werden, beispielsweise durch eine Ausleitvorrichtung. Wenn die Inspektion am bewegten Objekt innerhalb einer Reihe von beispielsweise hintereinander transportierten Objekten durchgeführt wird, muss sichergestellt werden, dass an einer am Transportpfad in Transportrichtung weiter hinten angeordneten Position das korrekte Objekt ausgeleitet wird. Dazu ist bekannt, Objekte entlang des Transportpfads zu verfolgen.

Bezüglich der Verfolgung von Objekten ist aus DE 10 2018 107 689 A1 bekannt, dass ein Trackingsystem Lichtschrankensysteme aufweisen kann, um eine Bildaufnahme von Behältnissen in einem richtigen Moment auszulösen. Als Nachteil wird jedoch beschrieben, dass beispielsweise eine Transportkette eine Längung erfahren kann, sodass Parameter eines Trackingsystems nachgestellt werden müssen, um eine ordnungsgemäße Triggerung aufrechtzuerhalten.

Aufgabe der Erfindung ist es, ein Verfahren zum Anpassen mindestens eines Zeitfensters und eine Vorrichtung zum Verfolgen von bewegten Objekten bereitzustellen, die mit geringem Aufwand und damit geringen Kosten betrieben werden können.

Die Aufgabe wird durch die Merkmale der unabhängigen Ansprüche gelöst. Vorteilhafte Weiterbildungen sind Gegenstand der abhängigen Ansprüche sowie der folgenden Beschreibung.

Gemäß einem ersten Aspekt wird ein Verfahren zum Anpassen mindestens eines Zeitfensters zum Verfolgen mindestens eines entlang eines Transportpfads bewegten Objekts, insbesondere Behälters, beschrieben, umfassend zumindest die folgenden Schritte: Empfangen einer Vielzahl von Detektionssignalen eines ersten Sensors, der am Transportpfad angeordnet ist, wobei je ein Detektionssignal je einem entlang des Transportpfads bewegten Objekts zugeordnet ist; Festlegen einer Vielzahl von Zeitfenstern für mindestens einen Teil der Vielzahl der Detektionssignale, wobei das jeweils zugeordnete Objekt innerhalb des jeweiligen Zeitfensters an einem zweiten Sensor, der in Transportrichtung des mindestens einen Objekts entlang des Transportpfads hinter dem ersten Sensor angeordnet ist, erwartet wird; Empfangen einer Vielzahl von Triggersignalen des zweiten Sensors in mindestens einem Teil der Vielzahl der Zeitfenster, wobei jedes Triggersignal einen Detektionszeitpunkt des dem entsprechenden Zeitfenster zugeordneten Objekts an einer Position des zweiten Sensors am Transportpfad anzeigt; Ermitteln einer Abweichung zwischen einem Soll-Detektionszeitpunkt und der Vielzahl von Detektionszeitpunkten; und wenn die ermittelte Abweichung mindestens einen Schwellenwert überschreitet: Ausgeben mindestens eines Warnsignals und/oder Anpassen des Festlegens von zukünftigen Zeitfenstern basierend auf der ermittelten Abweichung.

Mit dem Verfahren kann die Position eines Zeitfensters rechtzeitig angepasst werden, wenn eine Abweichung einer Vielzahl von Triggersignalen des zweiten Sensors in dem bestehenden Zeitfenster ermittelt wird. Das Verfahren kann mittels einer Vorrichtung durchgeführt werden, die einen ersten Sensor und einen zweiten Sensor aufweist, die an einem Transportpfad angeordnet sein können, an dem Objekte entlang einer Transportrichtung bewegt werden können. Die Objekte können beispielsweise Behälter sein.

Unter einer Abweichung kann ein Mittelwert, ein Modus, d. h. ein Wert mit größter Häufigkeit, ein Median, ein Erwartungswert, eine Standardabweichung und/oder eine Varianz der Vielzahl Detektionszeitpunkte verstanden werden.

Der erste Sensor und der zweite Sensor können als Lichtschranken ausgebildet sein. Weiter kann der zweite Sensor dem ersten Sensor in Transportrichtung nachfolgen und beabstandet zu dem ersten Sensor angeordnet sein. Mit dem ersten Sensor kann eine Vielzahl von Detektionssignalen von entlang des Transportpfads hintereinander bewegten Objekten ermittelt werden. Ein Detektionssignal zeigt dabei ein Objekt an, das an dem ersten Sensor entlang des Transportpfads bewegt wird und von dem ersten Sensor erfasst wird.

Nach dem Empfang eines Detektionssignals des ersten Sensors kann ein Zeitfenster für das mit dem Detektionssignal detektierten Objekt festgelegt werden. Innerhalb dieses Zeitfensters wird das Objekt an dem zweiten Sensor erwartet. Das Festlegen des Zeitfensters kann das Festlegen eines Zeitpunkts des Zeitfensters nach dem Empfang des Detektionssignals sein, beispielsweise mittels eines festen Zeitabstands nach dem Empfang des Detektionssignals. Die Festlegung des Zeitfensters kann davon abhängen, wie weit der zweite Sensor am Transportpfad von dem ersten Sender beabstandet angeordnet ist bzw. wie schnell das Objekt die Strecke zwischen dem ersten Sensor und dem zweiten Sensor überbrückt. Jedes Zeitfenster kann einem Detektionssignal zugeordnet sein. D. h., dass je ein Zeitfenster je einem Detektionssignal zugeordnet sein kann. Für ein Detektionssignal können auch mehrere Zeitfenster festgelegt werden, insbesondere wenn weitere Sensoren dem ersten Sensor und/oder dem zweiten Sensor am Transportpfad nachfolgen. Weiter kann vorgesehen sein, dass für einige Detektionssignale kein Zeitfenster festgelegt wird. Für jedes Zeitfenster kann ein Soll-Detektionszeitpunkt für das detektierte Objekt vorgesehen sein. In dem festgelegten Zeitfenster kann von dem zweiten Sensor mindestens ein Triggersignal ermittelt werden, wenn ein Objekt entlang des Transportpfads an dem zweiten Sensor vorbei transportiert wird. Es ist jedoch nicht zwingend, dass in jedem Zeitfenster ein Triggersignal ermittelt wird, beispielsweise wenn kein Objekt innerhalb des Zeitfensters entlang des Transportpfads von dem zweiten Sensor erfasst wird.

Mit einem Triggersignal kann der zweite Sensor anzeigen, dass ein Objekt entlang des Transportpfads von dem zweiten Sensor erfasst und beispielsweise vorbeitransportiert wurde. Weiter kann ein Triggersignal einen Detektionszeitpunkt des entsprechenden von dem zweiten Sensor erfassten Objekts anzeigen.

Es werden eine Vielzahl von Triggersignalen empfangen, die innerhalb einer Vielzahl von verschiedenen Zeitfenstern von dem zweiten Sensor ausgegeben werden können. Für jedes empfangene Triggersignal kann eine Abweichung von dem entsprechenden für das jeweilige Zeitfenster geltenden Soll-Detektionszeitpunkt ermittelt werden. Aus der Vielzahl der Abweichungen kann dann eine Abweichung ermittelt werden. Wenn die Abweichung mindestens einen Schwellenwert überschreitet, der beispielsweise basierend auf Erfahrungswerten vordefiniert sein kann, kann eine Anpassung für die Festlegung von zukünftigen Zeitfenstern erfolgen. Durch die Verwendung des mindestens einen Schwellenwerts kann eine Anpassung der zukünftigen Zeitfenster erst dann erfolgen, wenn eine signifikante mittlere Abweichung auftritt. Damit kann die Anzahl der Anpassungsvorgänge auf ein benötigtes Minimum beschränkt werden. Der Aufwand für den Betrieb einer Vorrichtung zum Verfolgen von Objekten kann damit minimiert werden.

Alternativ oder zusätzlich zu der Anpassung kann mindestens ein Warnsignal ausgegeben werden. Durch das Ausgeben eines Warnsignals kann beispielsweise Bedienpersonal auf die benötigte Anpassung aufmerksam gemacht werden. Das Bedienpersonal kann dann manuell das Festlegen von zukünftigen Zeitfenstern an die ermittelte Abweichung anpassen. Damit sei jedoch nicht ausgeschlossen, dass eine automatische Anpassung erfolgen kann.

Die Anpassung kann basierend auf der ermittelten Abweichung erfolgen. Auf diese Weise können die zukünftigen Zeitfenster derart festgelegt werden, dass die jeweiligen zukünftigen Triggersignale in den entsprechenden Zeitfenstern eine minimale mittlere Abweichung von den entsprechenden Soll-Detektionszeitpunkten aufweisen können. Wenn die Objekte beispielsweise mittels eines Transportbandes oder einer Transportkette transportiert werden, kann eine Längung des Transportbandes bzw. der Transportkette während ihrer Lebensdauer und ein damit einhergehender verlangsamter Transport der Objekte zwischen dem ersten Sensor und dem zweiten Sensor durch eine adaptive Korrektur der Position der Zeitfenster berücksichtigt werden. Damit wird vermieden, dass eine Verfolgung der zu verfolgenden Objekte dadurch scheitert, dass beispielsweise bei einer Längung eines Transportbands, mit dem die Objekte entlang des Transportpfads bewegt werden, eine Verschiebung der Triggersignale aus dem bestehenden Zeitfenster hinaus erfolgt. Das Zeitfenster kann damit adaptiv an eine Veränderung der Transportbedingungen angepasst werden. Die Anpassung, wie zukünftige Zeitfenster basierend auf der ermittelten Abweichung festgelegt werden, kann automatisch oder manuell erfolgen. Das Verfahren stellt damit eine erleichterte Bedienung einer Vorrichtung zum Verfolgen von entlang eines Transportpfads bewegten Objekten bereit, sodass durch den verringerten Aufwand Kosten eingespart werden können. Weiter kann eine Anzahl von nicht erfolgreichen Verfolgungsvorgängen von Objekten reduziert werden.

Weiter ist gemäß einigen Ausführungsbeispielen denkbar, dass, wenn eine Streuung der Detektionszeitpunkte aufgrund von mechanischen Gegebenheiten an den Sensoren oder dem Transportpfad breit ist, alternativ oder zusätzlich zu einer Anpassung der zukünftigen Zeitfenster eine mechanische Anpassung durchgeführt werden kann.

Gemäß einigen Ausführungsbeispielen ist denkbar, dass nach dem Schritt: Anpassen des Festlegens von zukünftigen Zeitfenstern, beim Festlegen ein angepasster Start-Zeitpunkt und/oder ein angepasster End-Zeitpunkt für zukünftige Zeitfenster nach dem Detektionssignal verwendet werden kann.

Durch die Anpassung des Start-Zeitpunkts und/oder des End-Zeitpunkts nach dem Empfang des entsprechenden Detektionssignals kann für zukünftige Zeitfenster eine optimale zeitliche Position eingestellt werden, um von dem zweiten Sensor ein entsprechendes Triggersignal für das zu verfolgende Objekt zu empfangen. Dabei kann das Zeitfenster lediglich in seiner Gesamtheit verschoben werden und/oder eine Änderung der der Länge des Zeitfensters durchgeführt werden.

Gemäß einigen Ausführungsbeispielen ist es denkbar, dass im Schritt: Anpassen des Festlegens von zukünftigen Zeitfenstern, ein Mittelwert der Vielzahl der Detektionszeitpunkte als neuer Soll-Detektionszeitpunkt festgelegt werden kann, wobei das Festlegen von zukünftigen Zeitfenstern auf dem neuen Soll-Detektionszeitpunkt basieren kann.

Der Soll-Detektionszeitpunkt kann anzeigen, in welchem zeitlichen Abstand nach dem Empfang des Detektorsignals der Transport des zu verfolgenden Objekts an den zweiten Sensor vorbei erwartet wird. Basierend auf dem erwarteten Vorbeitransport des zu verfolgenden Objekts kann das Zeitfenster nach dem Empfang des Detektionssignals festgelegt werden. Durch die Verwendung des Mittelwerts der Vielzahl der Detektionszeitpunkte der ermittelten Abweichungen als neuer Soll-Detektionszeitpunkt, kann auf einfache Weise eine Anpassung der zukünftigen Zeitfenster an eine Verschiebung der Abweichungen erfolgen.

Gemäß einigen Ausführungsbeispielen ist es denkbar, dass die zukünftigen Zeitfenster derart festgelegt werden, dass der neue Soll-Detektionszeitpunkt mittig im Zeitfenster angeordnet werden kann.

Durch die Positionierung der zukünftigen Zeitfenster derart, dass der neue Soll-Detektionszeitpunkt in der Mitte dieser Zeitfenster angeordnet wird, kann eine erwartete Streuung der ermittelten Detektionszeitpunkte um den Soll-Detektionszeitpunkt optimal in den zukünftigen Zeitfenstern angeordnet werden. Die Streuung der ermittelten Selektionszeitpunkte kann beispielsweise einer Gaußglocke entsprechen. Der Start-Zeitpunkt und der End-Zeitpunkt der zukünftigen Zeitfenster kann damit symmetrisch um die Gaußglocke angeordnet werden. Damit kann die Ermittlung der Triggersignale mittels des zweiten Sensors mit erhöhter Zuverlässigkeit erfolgen.

Gemäß einigen Ausführungsbeispielen ist denkbar, dass im Schritt: Ermitteln einer Abweichung, mindestens ein Erwartungswert für die Detektionszeitpunkte ermittelt werden kann.

Der Erwartungswert kann dem Soll-Detektionszeitpunkt entsprechen. Mit dem Erwartungswert kann mittels statistischer Mittel eine Anpassung der Zeitfenster erfolgen. Die Anpassung für zukünftige Zeitfenster kann damit mit einer hohen statistischen Validität ausgebildet werden.

Gemäß einigen Ausführungsbeispielen ist denkbar, dass im Schritt: Ermitteln einer Abweichung, mindestens ein von der Abweichung abhängiger Prozessfähigkeitsindex ermittelt werden kann, wobei der Schritt: Anpassen des Festlegens von zukünftigen Zeitfenstern, lediglich dann ausgeführt werden kann, wenn eine Verschiebung des mindestens einen Prozessfähigkeitsindex von einem optimalen Prozessfähigkeitsindex einen Schwellenwert überschreitet.

Der Prozessfähigkeitsindex kann anzeigen, wie gut eine statistische Verteilung einer Vielzahl von Triggerzeitpunkten in die entsprechenden Zeitfenster passt. So kann beispielsweise festgelegt sein, dass je größer der Prozessfähigkeitsindex ist, desto besser die statistische Verteilung in die entsprechenden Zeitfenster passt. Mit dem Prozessfähigkeitsindex kann damit ein aussagekräftiges Maß bereitgestellt werden, mit dem Abweichungen von einer optimalen Verteilung innerhalb der entsprechenden Zeitfenster beurteilt werden können.

Gemäß einigen Ausführungsbeispielen ist es denkbar, dass der mindestens eine Prozessfähigkeitsindex aus einem Verhältnis aus einem kleinsten Zeitabstand eines Mittelwerts der Vielzahl der Detektionszeitpunkte von Grenzen des Zeitfensters und einem Vielfachen einer Standardabweichung des Mittelwerts ermittelt werden kann.

Die Grenzen des Zeitfensters können beispielsweise der Start-Zeitpunkt und der End-Zeitpunkt des entsprechenden Zeitfensters sein. Wenn der Mittelwert der Vielzahl der Detektionszeitpunkte mittig in dem Zeitfenster angeordnet ist, sind die Abstände zur dem Start-Zeitpunkt und dem End-Zeitpunkt des Zeitfensters zu dem Mittelwert betragsmäßig gleich. Bei einer Verschiebung verkleinert sich zumindest einer der beiden Abstände. Da im Zähler des Verhältnisses bzw. Quotienten der kleinere Wert der beiden Abstände steht, kann der Prozessfähigkeitsindex einer optimale Verteilung der Mittelwerte maximal sein. Der Nenner des Verhältnisses kann beispielsweise das dreifache der Standardabweichung des Mittelwerts betragen. Der Nenner kann jedoch auch ein anderes Vielfaches der Standardabweichung betragen. Auf diese Weise kann ein aussagekräftiger Prozessfähigkeitsindex bereitgestellt werden, sodass eine Anpassung der Zeitfenster mit erhöhter Zuverlässigkeit verbessert werden kann.

Alternativ oder zusätzlich zur Verwendung der Standardabweichung kann beispielsweise die Varianz des Mittelwerts oder ein Vielfaches der Varianz verwendet werden.

Es sei jedoch nicht ausgeschlossen, dass der Prozessfähigkeitsindex gemäß einer alternativen Weise ermittelt wird. Beispielsweise kann auch ein Abstand des Mittelwerts zu dem Soll-Detektionszeitpunkt oder der Mitte des Zeitfensters für die Ermittlung des Prozessfähigkeitsindex verwendet werden. Dann kann beispielsweise ein Wert des Prozessfähigkeitsindex von Null den optimalen Fall darstellen, wobei eine Verschiebung der Mittelwerte zu einem Betrag ungleich Null führen kann.

Gemäß einigen Ausführungsbeispielen ist denkbar, dass eine Änderung der Abweichung extrapoliert werden kann, wobei der Schritt: Anpassen des Festlegens von zukünftigen Zeitfenstern, basierend auf der extrapolierten Abweichung ausgeführt werden kann.

Die extrapolierten Abweichungen für die Anpassung der Festlegung von zukünftigen Zeitfenstern können zusätzlich oder alternativ zu der Verwendung der Triggersignale verwendet werden. Durch die Verwendung der Extrapolation kann einer Abweichung der Triggersignale bzw. der Detektionszeitpunkte von dem Soll-Detektionszeitpunkt vorausschauend vorgegriffen werden. Anpassungen können damit rechtzeitig vor dem Auftreten einer signifikanten Abweichung ausgeführt werden, sodass die Zuverlässigkeit der Verfolgung der Objekte weiter verbessert werden kann.

Gemäß einem zweiten Aspekt wird eine Vorrichtung zum Verfolgen mindestens eines entlang eines Transportpfads bewegten Objekts, insbesondere Behälters, beschrieben, umfassend mindestens eine Steuereinheit, mindestens einen Transportpfad für das mindestens eine Objekt, einen ersten Sensor, der am Transportpfad angeordnet ist und zum Ausgeben mindestens eines Detektionssignals bei Detektion eines entlang des Transportpfads an dem ersten Sensor vorbeibewegten Objekts ausgebildet ist, und einen zweiten Sensor, der in einer Transportrichtung des mindestens einen Objekts hinter dem ersten Sensor angeordnet ist und zum Ausgeben mindestens eines Triggersignals bei Detektion eines entlang des Transportpfads an dem ersten Sensor vorbeibewegten Objekts ausgebildet ist, wobei die mindestens eine Steuereinheit zum Ausführen des Verfahrens nach der vorangegangenen Beschreibung ausgebildet ist.

Vorteile und Wirkungen sowie Weiterbildungen der Vorrichtung ergeben sich aus den Vorteilen und Wirkungen sowie Weiterbildungen des oben beschriebenen Verfahrens. Zur Vermeidung von Wiederholungen wird daher in dieser Hinsicht auf die vorangegangene Beschreibung verwiesen.

Gemäß einigen Ausführungsbeispielen ist denkbar, dass der erste Sensor und/oder der zweite Sensor als Lichtschranke ausgebildet sein können.

Gemäß einem dritten Aspekt wird eine Anlage zum Herstellen und/oder Behandeln mindestens eines Objekts, insbesondere Behälters, beschrieben, umfassend mindestens eine Herstellungs- und/oder Behandlungsvorrichtung für mindestens ein Objekt und mindestens eine Vorrichtung nach der vorangegangenen Beschreibung, wobei sich der mindestens eine Transportpfad von der mindestens einen Herstellungsund/oder Behandlungsvorrichtung zu der mindestens einen Vorrichtung zum Verfolgen erstreckt.

Vorteile und Wirkungen sowie Weiterbildungen der Anlage ergeben sich aus den Vorteilen und Wirkungen sowie Weiterbildungen des oben beschriebenen Verfahrens und/oder der oben beschriebenen Vorrichtung. Zur Vermeidung von Wiederholungen wird daher in dieser Hinsicht auf die vorangegangene Beschreibung verwiesen.

Gemäß einigen Ausführungsbeispielen ist denkbar, dass die Anlage weiter eine Auswurfvorrichtung aufweisen kann, die in Transportrichtung der Objekte hinter der Vorrichtung zum Verfolgen am Transportpfad angeordnet ist.

Mit der Auswurfvorrichtung können Objekte, die beispielsweise in einer Inspektion als fehlerhaft beurteilt wurden, ausgeworfen werden. Das Detektionssignal kann dabei vor, während oder nach der Inspektion von dem ersten Sensor ausgegeben werden, wobei der erste Sensor derart in Bezug zum Ort der Inspektion des Objekts angeordnet ist, dass feststeht, dass das detektierte Objekt auch das inspizierte Objekt ist. Über die Verfolgung mittels des Triggersignals kann dann an in Transportrichtung hinten angeordneter Position das Auswerfen bzw. Ausleiten des Objekts aus dem Transportpfad erfolgen.

Im Folgenden wird die Erfindung anhand einer beispielhaften Ausführungsform mittels der beigefügten Zeichnung beschrieben. Es zeigen:
- Figur 1: ein Flussdiagramm des Verfahrens zum Anpassen mindestens eines Zeitfensters;
- Figur 2: eine schematische Darstellung einer Vorrichtung zum Verfolgen mindestens eines entlang eines Transportpfads bewegten Objekts;
- Figur 3a, b: eine schematische Darstellung der Zeitabfolge der Sensorsignale und der Verschiebung des Triggersignals;
- Figur 4a-c: eine schematische Darstellung der Anpassung der Festlegung des Zeitfensters;
- Figur 5: eine schematische Darstellung der Zeitabfolge der Sensorsignale mit angepasstem Zeitfenster; und
- Figur 6: ein Diagramm das schematisch eine Extrapolation der Änderung Mittelwerte der Triggersignale in Bezug auf die entsprechenden Detektionssignale zeigt;
- Figur 7: eine schematische Darstellung einer Anlage zum Herstellen und/oder Behandeln mindestens eines Objekts.

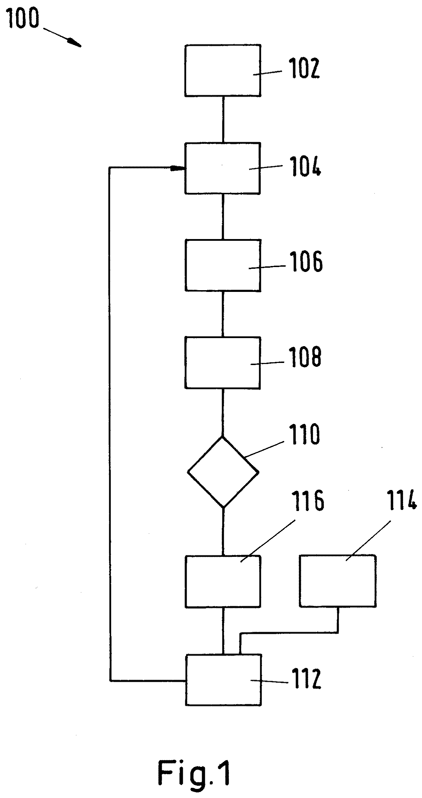

Das Verfahren zum Anpassen mindestens eines Zeitfensters wird im Folgenden in seiner Gesamtheit mit dem Bezugszeichen 100 referenziert, wie in Figur 1 dargestellt ist.

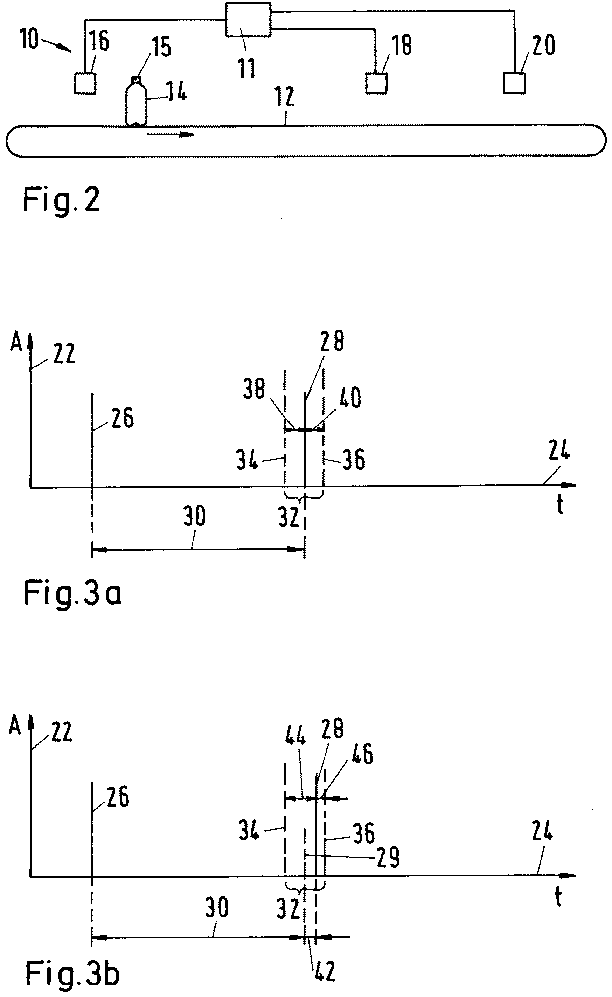

Das Verfahren 100 kann mittels einer Vorrichtung zum Verfolgen mindestens eines entlang eines Transportpfads bewegten Objekts ausgeführt werden, die gemäß Figur 2 mit dem Referenzzeichen 10 dargestellt wird.

Die Vorrichtung 10 kann mindestens einen Transportpfad 12 aufweisen, der beispielsweise durch eine Transportkette bzw. ein Transportband dargestellt werden kann. Entlang des Transportpfads 12 kann mindestens ein Objekt 14 bewegt werden, dass in diesem Ausführungsbeispiel als Behälter dargestellt ist. Der Behälter kann beispielsweise einen Verschluss 15 aufweisen.

Weiter kann die Vorrichtung 10 einen ersten Sensor 16 und einen zweiten Sensor 18 aufweisen. Es können weitere Sensoren 20 vorgesehen sein. Der erste Sensor 16 und der zweite Sensor 18 sind derart angeordnet, dass sie Objekte 14, die entlang des Transportpfad 12 bewegt werden, detektieren können. Der zweite Sensor 18 folgt dabei in Transportrichtung, die durch den Pfeil in Figur 2 dargestellt ist, auf den ersten Sensor 16.

Die Vorrichtung 10 kann weiter eine Steuereinheit 11 aufweist, die signaltechnisch mit dem ersten Sensor 16, dem zweiten Sensor 18 und den gegebenenfalls vorhandenen weiteren Sensoren 20 verbunden sein kann. Das Verfahren 100 kann beispielsweise mittels der Steuereinheit 11 ausgeführt werden.

Der erste Sensor 16 kann bei Detektion eines Objekts 14 ein Detektionssignal 26 ausgeben, das schematisch in Figur 3a dargestellt ist. Dabei zeigt Figur 3a ein Diagramm, das auf der Hochachse 22 eine Signalamplituden anzeigt und auf der Rechtsachse 24 die Zeit.

Der zweite Sensor 18 kann bei Detektion eines Objekts 14 ein Triggersignal 28 ausgeben. Das Detektionssignal 26 und das Triggersignal 28 können identischer Art sein. Die Benennung der Signale 26, 28 ist zur Unterscheidung der beiden Signale 26, 28 unterschiedlich gewählt.

Der erste Sensor 16 und der zweite Sensor 18 können beispielsweise als Lichtschranken ausgebildet sein. Bei Unterbrechung der Lichtschranken kann das entsprechende Signal durch den Sensor 16, 18 ausgegeben werden. Dabei können der erste Sensor 16 und der zweite Sensor 18 auf Höhe der Verschlüsse 15 der Behälter bzw. Objekte 14 angeordnet sein. Damit seien jedoch andere Positionierungen der Sensoren 16, 18 nicht ausgeschlossen, beispielsweise auf Höhe des Flaschenbauchs.

Gemäß Schritt 102 des Verfahrens 100 werden von dem ersten Sensor 16 eine Vielzahl von Detektionssignalen empfangen. Dabei ist je ein Detektionssignal je einem von dem ersten Sensor 16 detektierten Objekt 14 zugeordnet.

Gemäß einem weiteren Schritt 104 kann für zumindest einen Teil der Vielzahl der Detektionssignale 26, vorzugsweise für alle, jeweils ein Zeitfenster 32 festgelegt werden, in dem das entlang des Transportpfads 12 bewegte Objekt 14 an dem zweiten Sensor 18 erwartet wird. D. h., dass innerhalb des festgelegten Zeitfensters 32 nach dem entsprechenden Detektionssignal 26 ein Triggersignal 28 des zweiten Sensors 18 erwartet wird.

Das Zeitfenster 32 kann nach einem festgelegten ersten zeitlichen Abstand 30 nach dem Detektionssignal 26 festgelegt sein. Der erste zeitliche Abstand 30 kann beispielsweise eine Mitte des Zeitfensters 32 definieren. Alternativ kann sich der erste zeitliche Abstand 30 jedoch auch auf einen anderen Zeitpunkt, insbesondere einen Start-Zeitpunkt 34 und einen End-Zeitpunkt 36 des Zeitfensters 32 beziehen.

Im optimalen Zustand, der in Figur 3a dargestellt ist, ist das Triggersignal 28 mittig in dem Zeitfenster 32 positioniert. D. h., dass ein zweiter zeitlicher Abstand 38 des Triggersignals 28 zu einem Start-Zeitpunkt 34 und ein dritter zeitlicher Abstand 40 des Triggersignals 28 zu einem End-Zeitpunkt 36 betragsmäßig gleich sind.

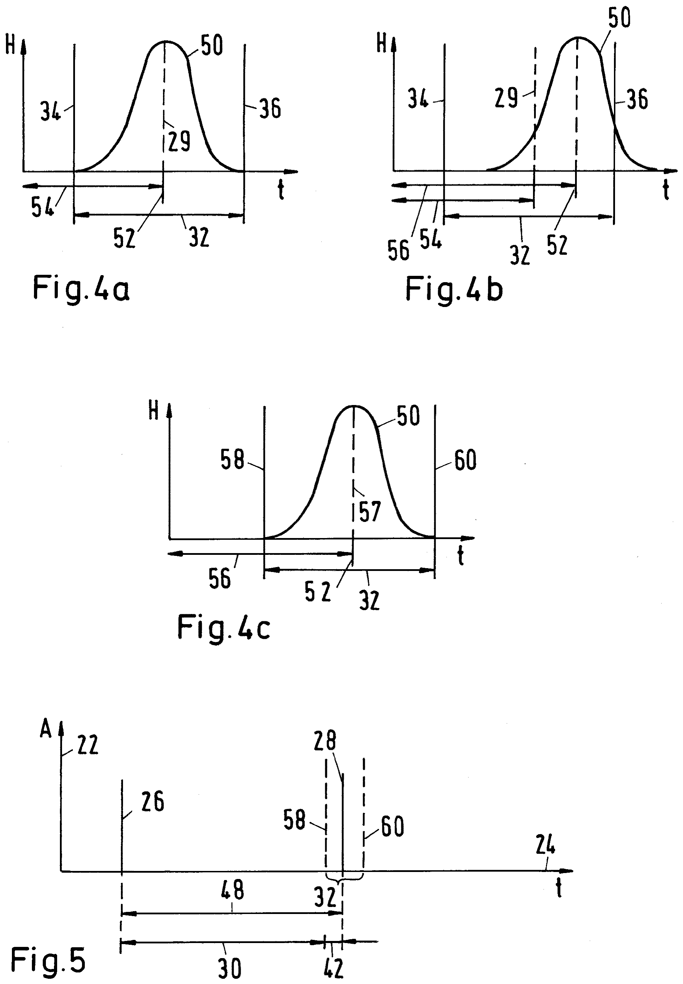

Wenn gemäß Schritt 106 eine Vielzahl von Triggersignalen 28 aus einer Vielzahl von Zeitfenstern 32 ermittelt wird, kann diese gemäß einer Standardverteilung, insbesondere einer Gaußglocke, um den Soll-Detektionszeitpunkt 29 verteilt sein. Die Vielzahl von Zeitfenstern 32 kann zumindest einen Teil der in Schritt 104 festgelegten Zeitfenster 32 umfassen. Dabei zeigt Figur 4a ein Diagramm, dessen Hochachse die Häufigkeit der erfassten Triggersignale zu einem auf der Rechtsachse angegebenen Zeitpunkt in Bezug zum entsprechenden Zeitfenster 32 darstellt. Die Linie 50 zeigt dabei eine Standardverteilung der Triggersignale 28 um den Soll-Detektionszeitpunkt 29. Zur Orientierung ist ein vierter zeitlicher Abstand 54 des Soll-Detektionszeitpunkts 29 zu der Hochachse dargestellt.

Der Soll-Detektionszeitpunkt 29 kann dem Erwartungswert 52 für den Detektionszeitpunkt der von dem zweiten Sensor 18 erfassten Objekte 14 entsprechen.

Die Vorrichtung 10 kann aus dem optimalen Zustand gelangen, wenn sich beispielsweise eine Transportkette durch die Benutzung mit der Zeit längt. Dadurch kann sich die Zeit, die ein Objekt 14 von dem ersten Sensor 16 zu dem zweiten Sensor 18 benötigt, verlängern. Das Triggersignal 28 wird dadurch erst später durch den zweiten Sensor 18 ausgegeben. D. h., dass sich die Triggersignale 28 des zweiten Sensors 18 mit der Zeit in Richtung des End-Zeitpunkts 36 des Zeitfensters 32 verschieben. Dies ist beispielhaft in Figur 3b dargestellt. Das Triggersignal 28 weist einen zusätzlichen fünften zeitlichen Abstand 42 zu einem Soll-Detektionszeitpunkt 29 auf, der beispielsweise mittig in dem Zeitfenster 32 angeordnet sein kann.

Entsprechend kann das Triggersignal 28 zu dem Start-Zeitpunkt 34 nun einen vergrößerten sechsten zeitlichen Abstand 44 und zu dem End-Zeitpunkt 36 einen verkleinerten siebten zeitlichen Abstand 46 aufweisen.

Wenn eine Vielzahl von Triggersignalen 28 ermittelt wird, kann sich die statistische Verteilung gemäß Figur 4b verschieben. Der Erwartungswert der verschobenen Gaußglocke 50 liegt dabei nicht mehr auf dem Soll-Detektionszeitpunkt 29. Dazu ist der achte zeitliche Abstand 56 zwischen dem verschobenen Erwartungswert 52 und der Hochachse zur Orientierung dargestellt, der sich von dem vierten zeitlichen Abstand 54 unterscheidet.

Wenn die Differenz zwischen dem vierten Abstand 54 und dem achten Abstand 56 einen Schwellenwert überschreitet, kann eine Anpassung des Zeitfensters 32 durchgeführt werden. Die Überschreitung des Schwellenwerts kann beispielsweise durch einen Prozessfähigkeitsindex ermittelt werden.

Für die Ermittlung des Prozessfähigkeitsindex kann zunächst ein Minimum zwischen der Entfernung des Erwartungswerts 52 von dem Start-Zeitpunkt 34 und der Entfernung des Erwartungswert 52 zu dem End-Zeitpunkt 36 des Zeitfensters 32 ermittelt werden. Der jeweils kleinere Wert kann, beispielsweise zu dem Dreifachen, der Standardabweichung des Erwartungswert 52 ins Verhältnis gesetzt werden. Das Verhältnis kann dann den Prozessfähigkeitsindex darstellen.

Je größer der Prozessfähigkeitsindex in diesem Ausführungsbeispiel ist, desto besser kann der optimale Zustand getroffen sein. Durch die Ermittlung des Minimums der beiden oben erläuterten Entfernungen wird bei einer Verschiebung des Erwartungswerts zu dem Start-Zeitpunkt 34 oder dem End-Zeitpunkt 36 des Zeitfensters 32 der Prozessfähigkeitsindex kleiner.

Von dem ermittelten Prozessfähigkeitsindex kann eine Differenz zu dem maximalen Prozessfähigkeitsindex, d. h. zu dem Prozessfähigkeitsindex des optimalen Zustands, gebildet werden. Wenn diese Differenz gemäß dem Vergleich 110 beispielsweise einen vordefinierten Schwellenwert überschreitet, kann der Schritt 112 durchgeführt werden. Dabei kann die Festlegung von zukünftigen Zeitfenstern basierend auf der ermittelten Abweichung angepasst werden.

Dazu kann gemäß Figur 4c beispielsweise ein neuer Start-Zeitpunkt 58 und ein neuer End-Zeitpunkt 60 für das Zeitfenster 32 nach der Erfassung des Detektionssignals 26 des ersten Sensors 16 verwendet werden. D. h., dass das zukünftige Zeitfenster 32 im Vergleich zu dem bisherigen Zeitfenster 32 verschoben sein können. Gleichzeitig kann damit ein neuer Soll-Detektionszeitpunkt 57 bereitgestellt werden, der dem Erwartungswert 52 der verschoben Gaußglocke 50 entsprechen kann.

Figur 5 zeigt dabei beispielhaft eine Verfolgung eines entlang des Transportpfad 12 bewegten Objekts 14 mit einem verschobenen Zeitfenster 32. Das Triggersignal 28 ist dabei mittig in dem Zeitfenster 32 mit dem neuen Start-Zeitpunkt 58 und dem neuen End-Zeitpunkt 60 angeordnet. Die Verschiebung des Zeitfensters kann dem fünften zeitlichen Abstand 42 entsprechen. Der geänderte zeitliche Abstand 48 zwischen dem Detektionssignal 26 und dem Zeitfenster 32 kann dann der Summe aus dem ersten zeitlichen Abstand 30 und dem fünften zeitlichen Abstand 42 entsprechen.

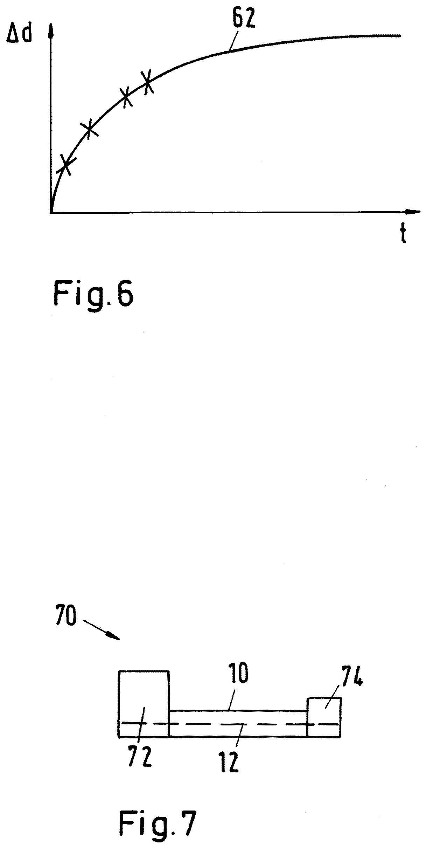

In Figur 6 ist ein Diagramm dargestellt, das auf der Hochachse eine Veränderung der Mittelwerte der Triggersignale 28 eines zeitlichen Abstands zu einem initialen Soll-Detektionszeitpunkt 29 zeigt. Auf der Rechtsachse ist die Betriebsdauer einer Vorrichtung 10 dargestellt. In diesem Ausführungsbeispiel sind vier Messwerte in dem Diagramm eingetragen. Die Kurve 62 ist eine Extrapolation basierend auf den Messwerten. Mittels der extrapolierten Kurve 62 kann gemäß dem optionalen Schritt 114 vorausschauend auf zeitlich auftretende Änderungen der Zeitposition der Mittelwerte der Triggersignale 28 reagiert werden, indem der Schritt 112 vorsorglich durchgeführt werden kann. Es muss nicht erst auf eine reale Verschiebung der Mittelwerte gewartet werden.

Die oben erläuterten Schritte 102, 104, 106, 108, 110 und 112 können im Rahmen eines computerimplementierten Verfahrens durchgeführt werden. Dabei kann der Schritt 112 alternativ auch manuell ausgeführt werden, insbesondere auch dann, wenn zumindest die Schritte 102 bis 110 im Rahmen eines computerimplementierten Verfahrens ausgeführt wurden.

Insbesondere, wenn der Schritt 112 manuell durchgeführt wird, kann vorgesehen sein, dass gemäß einem weiteren optionalen Schritt 116 ein Warnsignal ausgegeben wird, um Bedienpersonal auf die benötigte Anpassung hinzuweisen.

Die Vorrichtung 10 kann gemäß Figur 7 Teil einer Anlage 70 sein, die zum Herstellen und/oder behandeln mindestens eines Objekts ausgebildet sein kann. Dazu kann die Anlage 60 beispielsweise eine Herstellungs- und/oder Behandlungsvorrichtung 72 für mindestens ein Objekt 14 aufweisen. Der mindestens eine Transportpfad 12 kann sich von der mindestens ein Herstellungs- und/oder Behandlungsvorrichtung 72 zu der mindestens einen Vorrichtung 10 erstrecken.

Weiter kann mindestens eine Auswurfvorrichtung 74 vorgesehen sein, die in Transportrichtung hinter der Vorrichtung 10 angeordnet sein kann. Die Auswurfvorrichtung 74 kann dazu ausgebildet sein, Objekte 14 aus dem Transportpfad 12 auszuwerfen bzw. auszuleiten.

Das oben beschriebene Beispiel dient in keiner Weise einer Beschränkung der Erfindung. Vielmehr kann die Erfindung in vielfältiger Weise abgewandelt werden. Alle oben beschriebenen Merkmale der Erfindung können allein oder in Kombination miteinander wesentlich für die Erfindung sein.

### Bezugszeichenliste

- 10: Vorrichtung zum Verfolgen
- 11: Steuereinheit
- 12: Transportpfad
- 14: Objekt
- 15: Verschluss
- 16: Sensor
- 18: Sensor
- 20: Sensor
- 22: Hochachse
- 24: Rechtsachse
- 26: Detektionssignal
- 28: Triggersignal
- 29: Soll-Detektionszeitpunkt
- 30: zeitlicher Abstand
- 32: Zeitfenster
- 34: Start-Zeitpunkt
- 36: End-Zeitpunkt
- 38: zeitlicher Abstand
- 40: zeitlicher Abstand
- 42: zeitlicher Abstand
- 44: zeitlicher Abstand
- 46: zeitlicher Abstand
- 48: zeitlicher Abstand
- 50: Gaußglocke
- 52: Erwartungswert
- 54: zeitlicher Abstand
- 56: zeitlicher Abstand
- 57: neuer Soll-Detektionszeitpunkt
- 58: neuer Start-Zeitpunkt
- 60: neuer End-Zeitpunkt
- 62: Kurve
- 70: Anlage
- 72: Herstellungs- und/oder Behandlungsvorrichtung
- 74: Auswurfvorrichtung

## Patentansprüche

1. Verfahren (100) zum Anpassen mindestens eines Zeitfensters (32) zum Verfolgen mindestens eines entlang eines Transportpfads (12) bewegten Objekts (14), insbesondere Behälters, umfassend zumindest die folgenden Schritte:
- Empfangen (102) einer Vielzahl von Detektionssignalen (26) eines ersten Sensors (16), der am Transportpfad (12) angeordnet ist, wobei je ein Detektionssignal (26) je einem entlang des Transportpfads (12) bewegten Objekts (14) zugeordnet ist;
- Festlegen (104) einer Vielzahl von Zeitfenstern (32) für mindestens einen Teil der Vielzahl der Detektionssignale (26), wobei das jeweils zugeordnete Objekt (14) innerhalb des jeweiligen Zeitfensters (32) an einem zweiten Sensor (18), der in Transportrichtung des mindestens einen Objekts (14) entlang des Transportpfads (12) hinter dem ersten Sensor (16) angeordnet ist, erwartet wird;
- Empfangen (106) einer Vielzahl von Triggersignalen (26) des zweiten Sensors (18) in mindestens einem Teil der Vielzahl der Zeitfenster (32), wobei jedes Triggersignal (26) einen Detektionszeitpunkt des dem entsprechenden Zeitfenster (32) zugeordneten Objekts (14) an einer Position des zweiten Sensors (18) am Transportpfad (12) anzeigt;
- Ermitteln (108) einer Abweichung zwischen einem Soll-Detektionszeitpunkt (29) und der Vielzahl von Detektionszeitpunkten; und
- wenn die ermittelte Abweichung mindestens einen Schwellenwert überschreitet (110): Ausgeben (116) mindestens eines Warnsignals und/oder Anpassen (112) des Festlegens von zukünftigen Zeitfenstern (32) basierend auf der ermittelten Abweichung.

2. Verfahren (100) nach Anspruch 1, **dadurch gekennzeichnet, dass** nach dem Schritt: Anpassen (112) des Festlegens von zukünftigen Zeitfenstern (32), beim Festlegen ein angepasster Start-Zeitpunkt (58) und/oder ein angepasster End-Zeitpunkt (60) für zukünftige Zeitfenster (32) nach dem Detektionssignal (26) verwendet wird.

3. Verfahren (100) nach Anspruch 1 oder 2, **dadurch gekennzeichnet, dass** im Schritt: Anpassen (112) des Festlegens von zukünftigen Zeitfenstern (32), ein Mittelwert der Vielzahl der Detektionszeitpunkte als neuer Soll-Detektionszeitpunkt (57) festgelegt wird, wobei das Festlegen von zukünftigen Zeitfenstern (32) auf dem neuen Soll-Detektionszeitpunkt (57) basiert.

4. Verfahren (100) nach Anspruch 3, **dadurch gekennzeichnet, dass** die zukünftigen Zeitfenster (32) derart festgelegt werden, dass der neue Soll-Detektionszeitpunkt (57) mittig im Zeitfenster (32) angeordnet wird.

5. Verfahren (100) nach einem der vorangegangenen Ansprüche, **dadurch gekennzeichnet, dass** im Schritt: Ermitteln (108) einer Abweichung (52), mindestens ein Erwartungswert (52) für die Detektionszeitpunkte ermittelt wird.

6. Verfahren (100) nach einem der vorangegangenen Ansprüche, **dadurch gekennzeichnet, dass** im Schritt: Ermitteln (108) einer Abweichung, mindestens ein von der Abweichung abhängiger Prozessfähigkeitsindex ermittelt wird, wobei der Schritt: Anpassen (112) des Festlegens von zukünftigen Zeitfenstern (32), lediglich dann ausgeführt wird, wenn eine Verschiebung des mindestens einen Prozessfähigkeitsindex von einem optimalen Prozessfähigkeitsindex einen Schwellenwert überschreitet.

7. Verfahren (100) nach Anspruch 6, **dadurch gekennzeichnet, dass** der mindestens eine Prozessfähigkeitsindex aus einem Verhältnis aus einem kleinsten Zeitabstand eines Mittelwerts der Vielzahl der Detektionszeitpunkte von Grenzen des Zeitfensters (32) und einem Vielfachen einer Standardabweichung des Mittelwerts ermittelt wird.

8. Verfahren (100) nach einem der vorangegangenen Ansprüche, **dadurch gekennzeichnet, dass** eine Änderung der Abweichung extrapoliert wird, wobei der Schritt: Anpassen (112) des Festlegens von zukünftigen Zeitfenstern (32), basierend auf der extrapolierten Abweichung ausgeführt (114) wird.

9. Vorrichtung (10) zum Verfolgen mindestens eines entlang eines Transportpfads (12) bewegten Objekts (14), insbesondere Behälters, umfassend mindestens eine Steuereinheit (11), mindestens einen Transportpfad (12) für das mindestens eine Objekt (14), einen ersten Sensor (16), der am Transportpfad (12) angeordnet ist und zum Ausgeben mindestens eines Detektionssignals (26) bei Detektion eines entlang des Transportpfads (12) an dem ersten Sensor (16) vorbeibewegten Objekts (14) ausgebildet ist, und einen zweiten Sensor (18), der in einer Transportrichtung des mindestens einen Objekts (14) hinter dem ersten Sensor (16) angeordnet ist und zum Ausgeben mindestens eines Triggersignals (28) bei Detektion eines entlang des Transportpfads (12) an dem ersten Sensor (16) vorbeibewegten Objekts (14) ausgebildet ist, wobei die mindestens eine Steuereinheit zum Ausführen des Verfahrens (100) nach einem der vorangegangenen Ansprüche ausgebildet ist.

10. Vorrichtung (10) nach Anspruch 9, **dadurch gekennzeichnet, dass** der erste Sensor (16) und/oder der zweite Sensor (18) als Lichtschranke ausgebildet ist.

11. Anlage (70) zum Herstellen und/oder Behandeln mindestens eines Objekts (14), insbesondere Behälters, umfassend mindestens eine Herstellungsund/oder Behandlungsvorrichtung (72) für mindestens ein Objekt (14) und mindestens eine Vorrichtung (10) nach Anspruch 9 oder 10, wobei sich der mindestens eine Transportpfad (12) von der mindestens einen Herstellungs- und/oder Behandlungsvorrichtung (72) zu der mindestens einen Vorrichtung (10) zum Verfolgen erstreckt.

12. Anlage (70) nach Anspruch 11, **dadurch gekennzeichnet, dass** die Anlage (70) weiter eine Auswurfvorrichtung (74) aufweist, die in Transportrichtung der Objekte (14) hinter der Vorrichtung (10) zum Verfolgen am Transportpfad (12) angeordnet ist.
